# EUROPEAN PATENT APPLICATION

(11) **EP 4 656 485 A1**
(43) Date of publication of application: **03.12.2025**
(21) Application number: 24179049.2
(22) Date of filing: 30.05.2024
(51) Int. Cl.: B60W 50/02, B60W 50/029, B60W 50/04, B60W 60/00, B60W 50/00

(54) **COMPUTER SYSTEM AND METHOD FOR HANDLING DEGRADATION STATES OF AN AUTONOMOUS VEHICLE**

(71) Applicant: Volvo Autonomous Solutions AB, 405 08 Göteborg (SE)
(72) Inventor: Subramanian, Chidambaram, Jamestown, NC, 27282 (US); Lawhorn, Damien, Greensboro, 27409 (US); Laine, Leo, 414 84 Göteborg (SE)
(74) Representative: Valea AB

(57) **Abstract**

A computer system (600) comprising processing circuitry (602) configured to handle an autonomous vehicle (1) configured in a first degradation state (10) is provided. The first degradation state (10) controls a functionality limitation of the vehicle (1). The processing circuitry (602) is configured to detect a need for the vehicle (1) to transition from the first degradation state (10) to a second degradation state (11). The second degradation state (11) being indicative of an updated functionality limitation of the vehicle (1). The processing circuitry (602) is configured to, based on a predefined model, determine whether the vehicle (1) can safely transition from the first degradation state (10) to the second degradation state (11). The processing circuitry (602) is configured to, upon determining that the vehicle (1) cannot safely transition from the first degradation state (10) to the second degradation state (11), trigger a safety action.

## Description

### TECHNICAL FIELD

The disclosure relates generally to vehicle degradation. In particular aspects, the disclosure relates to handling degradation states of an autonomous vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When faults or errors are detected in autonomous vehicles, the vehicles are typically determined to either still be safe to travel autonomously, or they need to stop immediately. While it may in some scenarios be possible to reconfigure vehicles to operate autonomously under limited functionality with respect to a certain error and situation, dynamically adapting the vehicle to further errors and new situations is complex and not always safe or possible, and hence, autonomous vehicles will be configured to conservatively stop when new errors occur. This means that productivity of the vehicle is reduced, and safety may also be at risk as the vehicle may stop under unsafe conditions or in unsafe locations.

Hence, there is a need to improve efficiency and safety of handling autonomous vehicles.

### SUMMARY

According to a first aspect of the disclosure, a computer system comprising processing circuitry configured to handle an autonomous vehicle configured in a first degradation state is provided, wherein the first degradation state controls a functionality limitation of the vehicle.

The processing circuitry is configured to detect a need for the vehicle to transition from the first degradation state to a second degradation state, the second degradation state being indicative of an updated functionality limitation of the vehicle.

The processing circuitry is configured to, based on a predefined model, determine whether the vehicle can safely transition from the first degradation state to the second degradation state.

The processing circuitry is configured to, upon determining that the vehicle cannot safely transition from the first degradation state to the second degradation state, trigger a safety action. The safety action may be any suitable safety action for resolving issues regarding the transitions and may account for the first degradation state, the second degradation state, and any faults and/or errors causing the need to transition to the second degradation state.

The first aspect of the disclosure may seek to improve efficiency and safety of autonomous vehicles. A technical benefit may include improved efficiency and safety of autonomous vehicles. This is since the autonomous vehicle is enabled to operate under many different degradation states without having to immediately stop the vehicle. This allows for further productivity and will still maintain safety since if the transition is unsafe, the safety condition is triggered, which may be to perform a given safety operation such as to drive to the side of the road and perform a controlled stop.

Optionally in some examples, including in at least one preferred example, the processing circuitry is configured to obtain information of one or more faults or errors in the vehicle, and to determine whether the vehicle can safely transition from the first degradation state to the second degradation state based on the obtained information of the one or more faults or errors in the vehicle. The information of the one or more faults or errors in the vehicle may indicate the one or more faults or errors such and optionally information such as any of explicit naming of the one or more fault or errors, origin of the one or more faults or errors, functionality limitations due to the one or more faults or errors, or a combination thereof.

A technical benefit may include improved efficiency and safety of autonomous vehicles. This is since it is enabled to more accurately detect whether or not the transition is safe and if the safety action needs to be triggered.

Optionally in some examples, including in at least one preferred example, the processing circuitry is configured to obtain information of one or more faults or errors in the vehicle, and to determine the safety action based on the obtained information of the one or more faults or errors in the vehicle.

A technical benefit may include improved efficiency and safety of autonomous vehicles. This is since the safety action may be dynamically determined based on the faults or errors of the vehicle. This means that if possible, the vehicle may be able to perform a safety action such as to drive to a safe location or to perform stability control actions, reducing speed to a set threshold, turning on warning lights, etc. The safety operation may dynamically depend on the faults or errors and what capability limitations that may be coupled with said error or faults. If other operations are not available due to the error or fault, it may always be possible to perform a stop.

Optionally in some examples, including in at least one preferred example, the processing circuitry is configured to obtain the information of the one or more faults or errors in the vehicle by obtaining information of one or more faults or errors from any one or more out of: a perception layer of a control system of the vehicle, a control layer of the control system of the vehicle, an actuation layer of the control system of the vehicle, or a combination thereof.

A technical benefit may include improved efficiency and safety of autonomous vehicles. This is since the different layers of the control system may be able to observe different faults or errors which demand different types of safety actions and/or may indicate if the transition is safe to perform.

Optionally in some examples, including in at least one preferred example, the perception layer relates to a functionality of predicting or estimating environment and/or internal status of the vehicle, preferably relating to a towing status of towed vehicle units of the vehicle.

A technical benefit may include improved efficiency and safety of autonomous vehicles. This is since errors or faults with respect to the vehicle estimating the environment or the internal status of the vehicle may be accounted for.

Optionally in some examples, including in at least one preferred example, the control layer relates to a functionality of controlling a vehicle motion of the vehicle.

A technical benefit may include improved efficiency and safety of autonomous vehicles. This is since errors or faults with respect to the vehicle controlling the vehicle motion may be accounted for.

Optionally in some examples, including in at least one preferred example, the actuation layer relates to a functionality of actuating actuators of the vehicle.

A technical benefit may include improved efficiency and safety of autonomous vehicles. This is since errors or faults with respect to the vehicle actuating actuators of the vehicle may be accounted for.

Optionally in some examples, including in at least one preferred example, the processing circuitry is configured to determine the safety action based on predefined heuristics for the transition from the first degradation state to the second degradation state.

A technical benefit may include improved efficiency and safety of autonomous vehicles. This is since the safety action can be efficiently defined such that the vehicle will always have a well-defined safe action predefined for transitions between different degradation states which may also account for current faults and/or errors.

Optionally in some examples, including in at least one preferred example, the first or second degradation state respectively is indicative of any of that an autonomous mode of the vehicle is fully functional, or indicative of any one or more out of:
- an autonomous mode of the vehicle is only allowed in certain road areas, e.g., highways or geofenced,
- an autonomous mode of the vehicle is only allowed when travelling off-road,
- an autonomous mode of the vehicle is only allowed for a set vehicle speed range,
- an autonomous mode of the vehicle is only allowed when not attached to a trailer,
- the vehicle is in need of stopping.

A technical benefit may include improved efficiency and safety of autonomous vehicles. This is since the different degradation states may utilize a number of different transitions possible, and since they all may be considered, the vehicle can operate safely under any transition.

According to a second aspect of the disclosure, a vehicle comprising and/or is controlled by the computer system according to the first aspect is provided.

According to a third aspect of the disclosure, a computer-implemented method for handling an autonomous vehicle configured in a first degradation state is provided. The first degradation state controls a functionality limitation of the vehicle.

The method comprises, by processing circuitry of a computer system, detecting a need for the vehicle to transition from the first degradation state to a second degradation state, the second degradation state being indicative of an updated functionality limitation of the vehicle.

The method comprises, by the processing circuitry, based on a predefined model, determining whether the vehicle can safely transition from the first degradation state to the second degradation state.

The method comprises, by the processing circuitry, upon determining that the vehicle cannot safely transition from the first degradation state to the second degradation state, triggering a safety action.

Optionally in some examples, including in at least one preferred example, the method comprises determining the safety action based on predefined heuristics for the transition from the first degradation state to the second degradation state.

Optionally in some examples, including in at least one preferred example, the method comprises obtaining information of one or more faults or errors in the vehicle, and one or both of :
- determining whether the vehicle can safely transition from the first degradation state to the second degradation state based on the obtained information of the one or more faults or errors in the vehicle, and
- determining the safety action based on the obtained information of the one or more faults or errors in the vehicle.

The second and third aspects may correspond to any of the features, examples, and/or benefits of the first aspect and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary vehicle according to an example.
**FIG. 2** is a flow chart of an exemplary method according to an example.
**FIG. 3** is a state diagram according to an example.
**FIG. 4** is another view of **FIG. 1****,** according to an example.
**FIG. 5** is a flow chart of an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may relate to handling degradation states of an autonomous vehicle. In particular, it may be determined whether it is safe for a vehicle to transition from one degradation state to another, and if not, a safety action may be triggered.

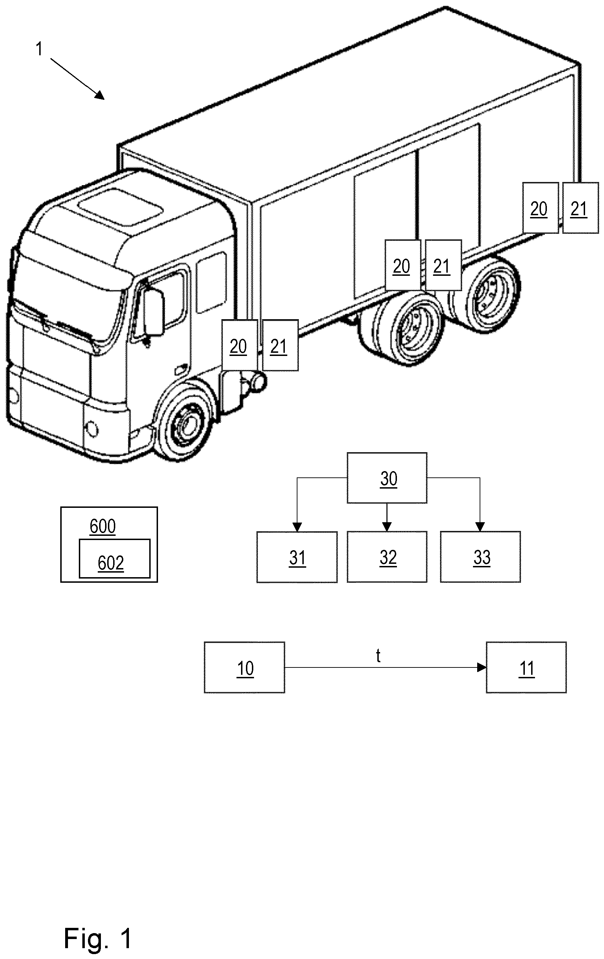

**FIG. 1** illustrates an exemplary vehicle 1 according to an example. The vehicle 1 is an autonomous vehicle. In other words, the vehicle 1 is at least partly autonomous such that it may operate without immediate control by an operator. For example, the vehicle 1 may manage steering and vehicle motion independent of the operator. The operator may instead input to a user interface of the vehicle 1, operations for the vehicle 1 to perform, e.g., a route to travel.

The vehicle 1 may be any suitable vehicle, e.g., any one out of a car, a vehicle combination, a truck, a bus, and a heavy-duty vehicle.

The vehicle 1 may comprise **one or more sensors 20** arranged for measuring any suitable parameter of the vehicle 1. The one or more sensors 20 may comprise any suitable sensors, such as speedometers, motion sensors, Radar, Lidar, cameras, pressure sensors, e.g., within a pneumatic braking system of a tractor or trailer of the vehicle 1, and/or on bellows for air suspension used for load detection and/or used for brake applications for estimating mass of the vehicle.

Additionally or alternatively, the one or more sensors 20 may comprise an accelerometer and/or a yaw rate sensor.

The vehicle 1 may comprise **one or more actuators 21** arranged for actuating any suitable action of the vehicle 1, e.g., any one or more out of controlling suspensions, controlling brakes, controlling steering, and controlling propulsion.

The vehicle 1 comprises a **control system 30** comprising a **perception layer 31,** a **control layer 32,** an **actuation layer 33,** or a combination thereof.

The perception layer 31 may relate to or handle a functionality of predicting or estimating environment and/or internal status of the vehicle 1, preferably relating to a towing status of towed vehicle units of the vehicle 1. I.e., the perception layer 31 may comprise any suitable control unit for performing the above-mentioned estimation or prediction.

The control layer 32 may relate to or handle a functionality of controlling a vehicle motion of the vehicle 1. For example, Vehicle Motion Management (VMM) units may be part of the control layer 32. The control layer 32 may use any suitable control unit for performing the above-mentioned functionality of handling vehicle motion. Handling vehicle motion may relate to an abstract layer of controlling yaw, steering, speed, etc.

The actuation layer 33 may relate to or handle a functionality of actuating the one or more actuators 21 of the vehicle 1.

Examples herein may be performed by a **computer system 600** and/or a **processing circuitry 602** therein.

The computer system 600 and/or the processing circuitry 602 therein may be comprised in the vehicle 1 and/or remote to the vehicle 1 such as part of a server or cloud service.

In some examples, the computer system 600 and/or the processing circuitry 602 may be or may comprise an Electronic Control Unit (ECU) for controlling the vehicle 1.

In some examples, the computer system 600 and/or the processing circuitry 602 therein may be communicatively coupled with, and/or capable of controlling any suitable entity of the vehicle 1. For example, the computer system 600 and/or the processing circuitry 602 may be able to obtain sensor data from the one or more sensors 20 and/or may be able to trigger actuation of the one or more actuators 21. As another example, the computer system 600 and/or the processing circuitry 602 may be able to control and/or communicate with the control system 30, the perception layer 31, the control layer 32, the actuation layer 33, or a combination thereof.

In examples herein, the vehicle 1 is configured in a **first degradation state 10.** The first degradation state 10 controls a functionality limitation of the vehicle 1, i.e., no limitation or one or more limitations.

In other words, the first degradation state 10 may be indicative of or control any of:
- that an autonomous mode of the vehicle 1 is fully functional, or
- indicative of or control any one or more out of:
   - an autonomous mode of the vehicle 1 is only allowed in certain road areas, e.g., highways or geofenced,
   - an autonomous mode of the vehicle 1 is only allowed when travelling off-road,
   - an autonomous mode of the vehicle 1 is only allowed for a set vehicle speed range,
   - an autonomous mode of the vehicle 1 is only allowed when not attached to a trailer,
   - the vehicle 1 is in need of stopping.

When configured in the first degradation state 10, the vehicle 1 may be controlled accordingly.

Examples may further include a **transition t** to a second degradation state 11, if there is detected need for the vehicle 1 to transition from the first degradation state 10 to the second degradation state 11.

The second degradation state is indicative of an updated functionality limitation of the vehicle 1. I.e., some fault or error may have occurred while the vehicle 1 is configured in the first degradation state 10, which demands a transition to the second degradation state 11, e.g., as some functionality may not be allowed with respect to the fault or error.

The second degradation state 11 may be indicative of or control any of:
- an autonomous mode of the vehicle 1 is only allowed in certain road areas, e.g., highways or geofenced,
- an autonomous mode of the vehicle 1 is only allowed when travelling off-road,
- an autonomous mode of the vehicle 1 is only allowed for a set vehicle speed range,
- an autonomous mode of the vehicle 1 is only allowed when not attached to a trailer,
- the vehicle 1 is in need of stopping.

In other words, the second degradation state 11 may relate to an increase in functionality limitation compared to the first degradation state 10.

When configured in the second degradation state 11, the vehicle 1 may be controlled accordingly.

While only two different degradation states are exemplified in FIG. 1, there may be many different degradation states with respective transitions.

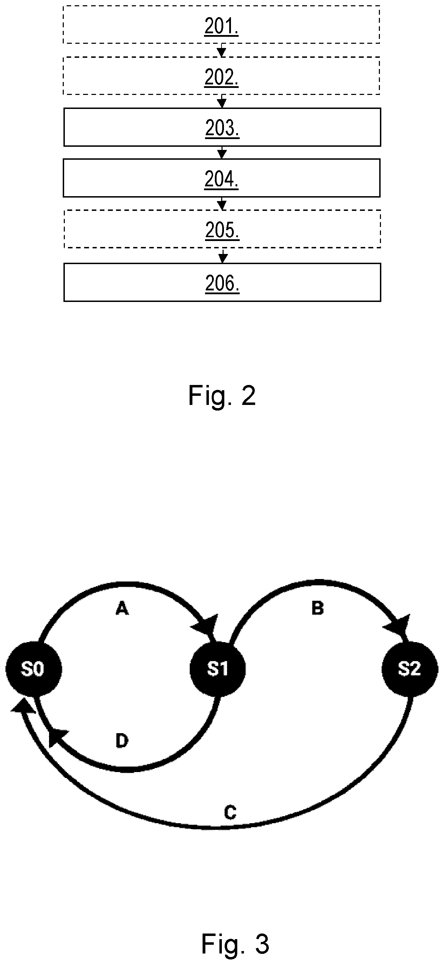

**FIG. 2** is an exemplary flow chart of a computer-implemented method for handling the autonomous vehicle 1 configured in the first degradation state 10. The first degradation state 10 controls a functionality limitation of the vehicle 1. Dashed boxes in FIG. 2 may indicate optional actions. The below actions may be taken in any suitable order. The actions described below may be performed by the computer system 600 and/or the processing circuitry 602 therein.

### Action 201

The method may comprise, obtaining the first degradation state 10. This may be performed by obtaining information of the current degradation state of the vehicle 1, e.g., from any suitable control unit or medium of the vehicle 1. The vehicle 1 may be initialized to a fully functional state as part of the first degradation state 10, or the first degradation state may comprise one or multiple functionality limitations.

Obtaining the first degradation state 10 may comprise determining the first degradation state 10 based on a predefined state model. The predefined state model may take into account one or more faults or errors of the vehicle 1, e.g., as obtained in action 202.

### Action 202

The method may comprise, obtaining information of one or more faults or errors of the vehicle 1. The information may be any suitable indication of the one or more faults or errors of the vehicle 1. The information may comprise an origin of the one or more faults or errors of the vehicle 1, a cause of the one or more faults or errors of the vehicle 1, a vehicle functionality limitation needed due to the one or more faults or errors of the vehicle 1, or a combination thereof.

The information of the one or more faults or errors may be obtained from any one or more out of: the perception layer 31 of the control system 30 of the vehicle 1, the control layer 32 of the control system 30 of the vehicle 1, the actuation layer 33 of the control system 30 of the vehicle 1, or a combination thereof.

Action 202 may be subsequent to action 201, such that the one or more faults or errors are different, leading to a different degradation state.

### Action 203

The method comprises, detecting a need for the vehicle 1 to transition from the first degradation state 10 to the second degradation state 11. The second degradation state 11 is indicative of an updated functionality limitation of the vehicle 1.

Detecting the need for the vehicle 1 to transition to the second degradation state 11 may comprise detecting that the one or more faults or errors relates to a loss of performing a functionality of the vehicle with sufficient accuracy, quality, safety, or a combination thereof.

Detecting the need for the vehicle 1 to transition to the second degradation state 11 may comprise determining the second degradation state 11 based on a predefined state model, e.g., same model as in action 201. The predefined state model may take into account the information of the one or more faults or errors, e.g., as obtained in action 202. For example, the predefined state model may be a lookup table or a mapping table which maps the information of the one or more faults or errors to a degradation state such as the second degradation state 11. The predefined state model may further also be a trained machine learning model which have been trained on historical data on faults or errors and their respective manually labelled degradation state.

Detecting the need for the vehicle 1 to transition to the second degradation state 11 may comprise detecting new failures not previously detected in the vehicle 1.

The transition may relate to any action needed to reach the second degradation state 11, e.g., based on what action is needed to change the first degradation state 10 to the second degradation state 11.

### Action 204

The method comprises, based on a predefined model, determining whether the vehicle 1 can safely transition from the first degradation state 10 to the second degradation state 11.

In some examples, determining whether the vehicle 1 can safely transition from the first degradation state 10 to the second degradation state 11 is based on the obtained information of the one or more faults or errors in the vehicle 1, e.g., as obtained in action 202.

In some examples, determining whether the vehicle 1 can safely transition from the first degradation state 10 to the second degradation state 11 based on the predefined model may take into account any one or more out of:
- the first degradation state 10,
- the second degradation state 11,
- a transition between the first degradation state 10 and the second degradation state 11,
- faults and/or errors in the vehicle 1, e.g., as obtained in action 202,
- or a combination thereof.

This means that any unique identification of a transition, e.g., with respect to current faults and/or errors of the vehicle 1, may be accounted for and may be associated with a mapping or a predefined function for evaluating whether or not the transition is safe.

For example, the predefined model of action 204 may be a predefined lookup table or a mapping table which maps the information of the degradation states and the one or more faults or errors to an indication of a safe transition or not, i.e., if it is safe to directly transition of if a safety action is needed. The predefined model may further also be a trained machine learning model which have been trained on historical data on transitions and their outcome, with respect to the one or more faults or errors and/or trained on simulated data on transitions between degradations states of a digital twin of the vehicle 1.

### Action 205

The method comprises, upon determining that the vehicle 1 cannot safely transition from the first degradation state 10 to the second degradation state 11, triggering a safety action.

In some examples, determining the safety action is based on the obtained information of the one or more faults or errors in the vehicle 1, e.g., as obtained in action 202.

In some examples, determining the safety action is based on predefined heuristics for the transition from the first degradation state 10 to the second degradation state 11. The predefined heuristics may take into account any one or more out of:
- the first degradation state 10,
- the second degradation state 11,
- a transition between the first degradation state 10 and the second degradation state 11,
- faults and/or errors in the vehicle 1, e.g., as obtained in action 202,
- or a combination thereof.

Determining the safety action may comprise using a lookup table with the transition and faults and/or errors in the vehicle 1 as input.

Determining the safety action may comprise using a statistical model such as a trained machine learning model trained on historical data of operations performed with respect to failures which have been determined to be safe, e.g., by manual inspection or by heuristics such as no problem or hazard was detected. The model may further be trained by simulation of a digital twin of the vehicle 1.

This means that any unique identification of a transition, e.g., with respect to current faults and/or errors of the vehicle 1, may be accounted for and may have a separate safety action.

Examples of safety actions that can be determined for some situations:
- Drive the vehicle 1 to a safe location,
- Reduce speed and/or acceleration, e.g., set and enforce a speed limit and/or an acceleration limit for the vehicle 1,
- Trigger a geo fence, e.g., to restrict the vehicle 1 into a certain area,
- Reduce a level of autonomy, e.g., reduce to only being able to perform basic operations such as lane changes or reduce to not being able to perform lane changes,
- Restrict a loading of the vehicle 1 such that the vehicle 1 will only be able to travel if not loaded by more than a threshold,
- Perform one or more stability control actions, such as to prevent rollover, jack-knifing, or yaw moment hazards,
- Trigger warning lights to turn on, or
- A combination thereof.

### Further variations and examples

Degradation state, e.g., the first degradation state 10 and/or the second degradation state 11, may in examples below be referred to as degraded mode or degraded state.

When the vehicle 1 enters a degraded mode such as the first degradation state 10 or the second degradation state 11 due to certain faults or errors, the vehicle 1 or systems therein may transmit information about the respective degraded state on a Controller Area Network (CAN) for various reasons such as any one or more out of the following examples:

**Alerting Other Systems:** Transmitting degraded mode information on the CAN bus allows other systems in the vehicle 1 to be aware of the current state such as the first degradation state 10. This may be crucial for maintaining coordination among different components and systems of the vehicle 1. For example, if the propulsion system of the vehicle 10 is in a degraded state, e.g., the first degradation state 10, braking or steering systems may need to adjust their behavior accordingly.

**Safety and Adaptation:** Other autonomous or safety-critical systems of the vehicle 1 may use the information to adapt their behavior to the degraded state. For instance, if any of the one or more sensors 20 is compromised, other systems of the vehicle 1 may need to rely more heavily on redundant sensors or adjust their algorithms to compensate for reduced sensor accuracy.

**Diagnosis and Troubleshooting:** Transmitting information about the degraded mode on the CAN bus may assist in diagnosing a root cause of issues with the vehicle 1. The data may be valuable for maintenance purposes, helping technicians identify and address faults more efficiently.

**Communication with External Entities:** In some examples, the vehicle 1 may transmit degraded mode information to external entities, such as a fleet management system or a remote monitoring center. This communication may facilitate remote diagnostics, allowing support teams to analyze the situation and provide guidance or assistance.

**User Notification:** The transmission of degraded mode information on the CAN bus may be used to trigger notifications to occupants or operators of the vehicle 1. This alerts them to the fact that the vehicle is not operating at its optimal state and may provide instructions or recommendations for the operator of the vehicle 1.

**Regulatory Compliance:** In certain jurisdictions, regulations may require vehicles to transmit information about their operational status, including any degraded modes or faults. This information may be logged and used for compliance reporting.

**Data Logging and Analysis:** Vehicle manufacturers and service providers may collect and analyze data from the CAN bus to improve the reliability and performance of their autonomous systems. Information about degraded modes may contribute to post-event analysis and system improvement efforts.

Examples herein relate to determining degradations states such as the first degradation state and/or the second degradation state 11. In particular, examples herein relate to detecting a need to transition to the second degradation state 11.

The Vehicle Degraded mode such as the first degradation 10 state and/or the second degradation state 11 may be determined from feedback from different parts of the vehicle 1, such as the perception layer 31, the control layer 32, and the actuation layer 33. Determining the first degradation state and/or the second degradation state 11, and detecting a need to transition to the second degradation state 11 may be based on any one or more out of the below feedback, e.g., as provided by the control system 30. The feedback may be transmitted to the computer system 600 and/or the processing circuitry therein 602, e.g., continuously or periodically.

### Perception Layer 31

The perception layer 31 may provide feedback on the following faults such as in categorical or numeric form, e.g., as part of any one or more out of actions 201-203:
- Environment prediction status,
- Vulnerable road user status,
- Vehicle state estimation status,
- Towed vehicle(s) state estimation status, or
- a combination thereof.

### Control Layer 32

The Control layer 32 may provide feedback on the following faults such as in categorical or numeric form, e.g., as part of any one or more out of actions 201-203:
- Max Deceleration,
- Max acceleration,
- Max and Min speed,
- Max turning radius,
- Max and Min yaw rate,
- Max and Min combination articulation and yaw,
- Max and Min roll, or
- A combination thereof.

### Actuation Layer 33

The Actuation layer 33 may provide feedback on the following faults such as in categorical or numeric form, e.g., as part of any one or more out of actions 201-203:
- Maximum Brake Torque on each wheel end of the vehicle 1,
- Maximum Steering efforts of the vehicle 1, e.g., steering wheel torque,
- Maximum Propulsion Torque on each wheel end of the vehicle 1,
- Minimum Brake Torque on each wheel end of the vehicle 1,
- Minimum Steering efforts, e.g., steering wheel torque,
- Minimum Propulsion Torque on each wheel end of the vehicle 1,
- Time for any one or more of the above feedback to reach a set threshold, e.g., 60% target values
- One or more Trailer Control signals, e.g., indicating towing status of a trailer of the vehicle 1, or
- A combination thereof.

The information from any one or more of the above three layers may be processed in a centralized architecture, e.g., as part of any one or more of actions 201-203 and may be a basis when determining the first degradation state 10, the second degradation state 11, or when detecting the need to transition to the second degradation state 11.

As an example, the first degradation state 10 and/or the second degradation state 11 may be determined to be any one or more out of:
- Vehicle Autonomy Not degraded,
- Vehicle Autonomy allowed only in highways,
- Vehicle Autonomy allowed only in off-road,
- Vehicle Autonomy allowed only above 35mph,
- Vehicle Autonomy allowed only below 10mph & bobtail only,
- Vehicle Autonomy Geofenced, or
- Vehicle need stop.

To handle the first degradation state 10 and/or the second degradation state 11 a mix of limits on geo fencing, speed, load, connection to towed vehicle(s) of the vehicle 1 may be applied. Note that this is not only for autonomy but may also relate to other functionality of the vehicle 1.

**FIG. 3** illustrates an example scenario of multiple different degradation states, illustrated as transitions between the different states, e.g., as a state machine.

Examples herein may relate to safety actions associated with transitions between degradation states such as from the first degradation state 10 to the second degradation state 11.

In particular, the safety actions of examples herein may be determined by the transitions between degradation states, such that the safety actions is determined to be safe actions for Level 4 (L4) autonomous vehicles, e.g., the vehicle 1.

FIG. 3 illustrates a number of degradations states S0, S1, S2 and transitions A between S0 and S1, transition B between S1 and S2, transition C between S2 and S0, and transition D between S1 and S0. It may be noted that each pair of degradation states S0, S1, S2 have their respective unique transition, which according to examples herein, may be mapped to a safety action, e.g., often or always different safety action per transition.

The first degradation state 10 and/or the second degradation state 11 may be represented by any of S0, S1, S2.

As shown in the FIG. 3 example, S0, S1 and S2 are three sample vehicle degraded states, e.g., the first degradation state 10 and/or the second degradation state 11, while their transitions are A, B, C and D. A master vehicle control unit, e.g., the computer system 600 and/or the processing circuitry 602 therein, may determine the safety action, e.g., as part of action 204, associated with each of these transitions such as (in pseudo code): IF the vehicle 1 is moved from Not degraded to Vehicle Need to stop AND IF the perception layer 31, control layer 32, and actuator layer 33 indicates that the vehicle 1 may be able to stop safely, the safety action may be determined to comprise: instructing the vehicle 1 or ECU thereof to pull over the vehicle 1 to a side of a road; If indicated that the vehicle 1 cannot stop safely, the safety action may be determined to comprise a command or instruction to an operator of the vehicle 1 to take control of the vehicle 1 immediately.

In some examples, for each transition, feedback as provided by the perception layer 31, control layer 32, and actuator layer 33, may determine the safety action for that particular transition.

In other words, a safety action for transition A may be determined, e.g., as part of action 205, based on the transition, e.g., from S0 to S1, and accounting for the feedback provided by the perception layer 31, control layer 32, and actuator layer 33. Another safety action for transition B may be determined in a similar manner, but based on the transition B, e.g., from S1 to S2.

Further systems affected by degradation states of the vehicle:
**Alerting Other Systems:** This state transition of examples herein may inform the other systems in the vehicle 1 about the necessary back up positions they may need to embrace to.
**Diagnosis and Troubleshooting:** Any necessary diagnosis and troubleshooting of the vehicle 1 may be initiated. For example if a leak in a valve is found it may be possible to isolate that pneumatic circuit from other systems.
**Communication with External Entities:** In some examples, the vehicle 1 may transmit degraded mode information to an uptime center. The uptime center may use that data as a basis for minor issues to be fixed using over the air software updates.
**User Notification:** The communication to an operator may be important during the state transition if feedback from an operator of the vehicle 1 is needed. Hence, the operator of the vehicle 1 may always be notified of the transition, e.g., by any suitable alert or message.
**Regulatory Compliance:** If an identified fault or error may risk putting the vehicle 1 in an incompliant state, then the vehicle 1 action(s), e.g., safety actions, may be determined to bypass all functionality and stop the vehicle 1 safely.
**Data Logging and Analysis:** All necessary level of logging may depend on the state of degradation. This is since at different degradation states, it may only be needed to log what is deemed necessary for said state.

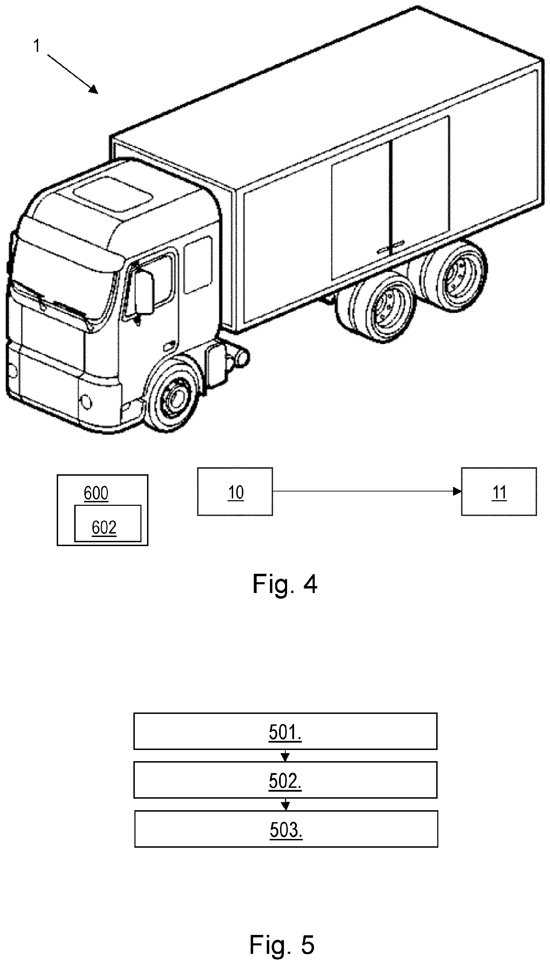

**FIG. 4** is another view of FIG. 1, according to an example. The computer system 600 comprising the processing circuitry 602 configured to handle the autonomous vehicle 1 configured in the first degradation state 10 is provided. The first degradation state 10 controls a functionality limitation of the vehicle 1.

The processing circuitry 602 being configured to detect a need for the vehicle 1 to transition from the first degradation state 10 to the second degradation state 11, the second degradation state 11 being indicative of an updated functionality limitation of the vehicle 1.

The processing circuitry 602 being configured to, based on a predefined model, determine whether the vehicle 1 can safely transition from the first degradation state 10 to the second degradation state 11.

The processing circuitry 602 being configured to, upon determining that the vehicle 1 cannot safely transition from the first degradation state 10 to the second degradation state 11, trigger a safety action.

**FIG. 5** is a flow chart of a method for handling the autonomous vehicle 1 configured in the first degradation state 10. The first degradation state 10 controls a functionality limitation of the vehicle 1. The method comprises the following actions which may be combined with any of the above-mentioned actions or examples in any suitable manner.

### Action 501

The method comprises, by the processing circuitry 602 of the computer system 600, detecting a need for the vehicle 1 to transition from the first degradation state 10 to the second degradation state 11. The second degradation state 11 is indicative of an updated functionality limitation of the vehicle 1.

### Action 502

The method comprises, by the processing circuitry 602, based on a predefined model, determining whether the vehicle 1 can safely transition from the first degradation state 10 to the second degradation state 11.

### Action 503

The method comprises, by the processing circuitry 602, upon determining that the vehicle 1 cannot safely transition from the first degradation state 10 to the second degradation state 11, triggering a safety action.

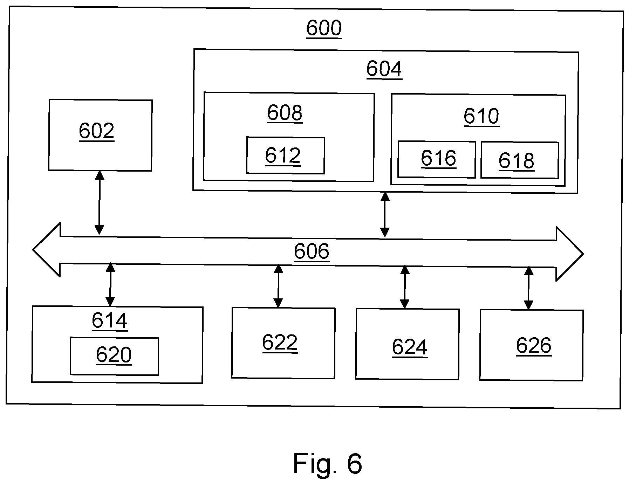

**FIG. 6** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follow a list of Examples 1-20 which may be combined with any one or more out of the above examples or actions, in any suitable manner.

Example 1. A computer system 600 comprising processing circuitry 602 configured to handle an autonomous vehicle 1 configured in a first degradation state 10, wherein the first degradation state 10 controls a functionality limitation of the vehicle 1, the processing circuitry 602 being configured to
- detect a need for the vehicle 1 to transition from the first degradation state 10 to a second degradation state 11, the second degradation state 11 being indicative of an updated functionality limitation of the vehicle 1,
- based on a predefined model, determine whether the vehicle 1 can safely transition from the first degradation state 10 to the second degradation state 11, and
- upon determining that the vehicle 1 cannot safely transition from the first degradation state 10 to the second degradation state 11, trigger a safety action.

Example 2. The computer system 600 of Example 1, wherein the processing circuitry 602 is configured to:
- obtain information of one or more faults or errors in the vehicle 1, and
- determine whether the vehicle 1 can safely transition from the first degradation state 10 to the second degradation state 11 based on the obtained information of the one or more faults or errors in the vehicle 1.

Example 3. The computer system 600 of Example 1 or 2, wherein the processing circuitry 602 is configured to:
- obtain information of one or more faults or errors in the vehicle 1, and
- determine the safety action based on the obtained information of the one or more faults or errors in the vehicle 1.

Example 4. The computer system 600 of Example 2 or 3, wherein the processing circuitry 602 is configured to obtain the information of the one or more faults or errors in the vehicle 1 by obtaining information of one or more faults or errors from any one or more out of: a perception layer 31 of a control system 30 of the vehicle 1, a control layer 32 of the control system 30 of the vehicle 1, an actuation layer 33 of the control system 30 of the vehicle 1, or a combination thereof.

Example 5. The computer system 600 of Example 4, wherein the perception layer 31 relates to a functionality of predicting or estimating environment and/or internal status of the vehicle 1, preferably relating to a towing status of towed vehicle units of the vehicle 1.

Example 6. The computer system 600 of Example 4 or 5, wherein the control layer 32 relates to a functionality of controlling a vehicle motion of the vehicle 1.

Example 7. The computer system 600 of Example 4 or 5 or 6, wherein the actuation layer 33 relates to a functionality of actuating actuators 21 of the vehicle 1.

Example 8. The computer system 600 of any of Examples 1-7, wherein the processing circuitry 602 is configured to determine the safety action based on predefined heuristics for the transition from the first degradation state 10 to the second degradation state 11.

Example 9. The computer system 600 of any of Examples 1-8, wherein the first or second degradation state 11 respectively is indicative of any of that an autonomous mode of the vehicle 1 is fully functional, or indicative of any one or more out of:
- an autonomous mode of the vehicle 1 is only allowed in certain road areas, e.g., highways or geofenced,
- an autonomous mode of the vehicle 1 is only allowed when travelling off-road,
- an autonomous mode of the vehicle 1 is only allowed for a set vehicle speed range,
- an autonomous mode of the vehicle 1 is only allowed when not attached to a trailer,
- the vehicle 1 is in need of stopping.

Example 10. A vehicle 1 comprising and/or is controlled by the computer system 600 of any of Examples 1-9.

Example 11. A computer-implemented method for handling an autonomous vehicle 1 configured in a first degradation state 10, wherein the first degradation state 10 controls a functionality limitation of the vehicle 1, the method comprising:
- by processing circuitry 602 of a computer system 600, detecting 203, 501 a need for the vehicle 1 to transition from the first degradation state 10 to a second degradation state 11, the second degradation state 11 being indicative of an updated functionality limitation of the vehicle 1,
- by the processing circuitry 602, based on a predefined model, determining 204, 502 whether the vehicle 1 can safely transition from the first degradation state 10 to the second degradation state 11, and
- by the processing circuitry 602, upon determining that the vehicle 1 cannot safely transition from the first degradation state 10 to the second degradation state 11, triggering 206, 503 a safety action.

Example 12. The method of Example 11, further comprising determining 205 the safety action based on predefined heuristics for the transition from the first degradation state 10 to the second degradation state 11.

Example 13. The method of Example 11 or 12, further comprising:
- obtaining 202 information of one or more faults or errors in the vehicle 1, and
- determining 204 whether the vehicle 1 can safely transition from the first degradation state 10 to the second degradation state 11 based on the obtained information of the one or more faults or errors in the vehicle 1.

Example 14. The method of any of Examples 11-13 further comprising:
- obtaining 202 information of one or more faults or errors in the vehicle 1, and
- determining 205 the safety action based on the obtained information of the one or more faults or errors in the vehicle 1.

Example 15. The method of any of Examples 13 or 14, wherein obtaining 202 the information of the one or more faults or errors in the vehicle 1 comprises obtaining information of one or more faults or errors from any one or more out of: a perception layer 31 of a control system 30 of the vehicle 1, a control layer 32 of the control system 30 of the vehicle 1, an actuation layer 33 of the control system 30 of the vehicle 1, or a combination thereof.

Example 16. The method of Example 15, wherein the perception layer 31 relates to a functionality of predicting or estimating environment and/or internal status of the vehicle 1, preferably relating to a towing status of towed vehicle units of the vehicle 1,

Example 17. The method of Example 15 or 16, wherein the control layer 32 relates to a functionality of controlling a vehicle motion of the vehicle 1, and wherein the actuation layer 33 relates to a functionality of actuating actuators 21 of the vehicle 1.

Example 18. The method of any of Examples 11-17, wherein the first or second degradation state 11 respectively is indicative of any of that an autonomous mode of the vehicle 1 is fully functional, or indicative of any one or more out of:
- an autonomous mode of the vehicle 1 is only allowed in certain road areas, e.g., highways or geofenced,
- an autonomous mode of the vehicle 1 is only allowed when travelling off-road,
- an autonomous mode of the vehicle 1 is only allowed for a set vehicle speed range,
- an autonomous mode of the vehicle 1 is only allowed when not attached to a trailer,
- the vehicle 1 is in need of stopping.

Example 19. A computer program product comprising program code for performing, when executed by the processing circuitry 602, the method of any of Examples 11-18.

Example 20. A non-transitory computer-readable storage medium comprising instructions, which when executed by the processing circuitry 602, cause the processing circuitry 602 to perform the method of any of Examples 11-18.

### Use cases and further variations

Below follows a number of use cases for different degradation states of the vehicle 1, along with some variations of examples above, which can be combined with any of the mentioned examples herein, in any suitable manner.

### Use case 1: Fail safe Brake valves.

In some examples, the vehicle 1 may comprises fast acting brake valves arranged to perform pressure control. A fail safe operation methodology of the fast active valves may include connecting a left side valve to a right side valve for steer axles of the vehicle 1. Therefore, under normal operating conditions the valves may perform necessary pressure controls to individually control steer axle brakes. Stability control and/or yaw control systems of the vehicle 1 may actuate a front outer wheel end only to counter steer any over steer disturbances to stabilize the combination vehicles.

However, the fail-safe operation is realized by pneumatically connecting the left- and right-hand side valves together, such as through pilot ports. When one of the valves fail, it may still be possible to brake both steer axles since both the valves, the working and the failed one are pneumatically connected. The pressure applied on both sides may always be the same and may not be able to perform individual wheel end braking. In such examples, the yaw control system does not have the enablers to control oversteer.

Under above example scenario, faults or errors in the control layer 32 may be evaluated by a vehicle degraded mode state machine, e.g., as in the examples above, and the degradation state such as the first degradation state 10 and/or the second degradation state 11, may be set to the following limits:
- Geofencing : No downgrade from full autonomy,
- Vehicle Speed : Less than a set threshold such as 45mph,
- Loading permitted : No downgrade from full autonomy,
- Permitted Lateral Acceleration : Reduced to a set threshold, e.g., 1m/s2 for performing yaw control.

### Use case 2A: Trailer Load Perception

As another non-limiting example, modern autonomous vehicles and electronic brake system may focus on optimized brake balance based on adhesion between axles and also between towed and towing vehicles. Therefore, it may be important to obtain a load distribution and load values of the vehicle 1, e.g., primary contributor for adhesion limits. If this information is not available, there is a possibility to under- or over- brake an axle, or more importantly under brake or over brake the vehicle 1 when the vehicle 1 comprises a trailer, where the vehicle 1 would then be at risk of jack knifing.

Under above example scenario, the perception layer 31 may be evaluated by a vehicle degraded mode state machine, e.g., as in the examples above, and the degradation state such as the first degradation state 10 and/or the second degradation state 11, may be set to the following limits:
- Geofencing: No Low Mu surface driving, e.g., geo fencing for the vehicle may be set such that the geo fences limit the vehicle 1 to only drive in areas associated with a friction coefficient above a threshold,
- Vehicle Speed : Less than a set threshold such as 45mph, and
- Loading permitted : No downgrade from full autonomy.

### Use case 2B: Trailer Brake Perception

As another non-limiting example, trailer brake valves are prone to be stuck open or close depending on an initial state in very cold temperatures. This may result in partial or complete lock up of brakes eventually dragging trailers of the vehicle 1 partially or completely. Similarly, if a valve is stuck closed, it may result in a complete release or only partial application of brakes and result in insufficient deceleration. In this case, the perception layer 31 may be evaluated by a vehicle degraded mode state machine, e.g., as in the examples above, and the degradation state such as the first degradation state 10 and/or the second degradation state 11, may be set to the following limits:
- Geofencing : No Cold temp regions, e.g., the vehicle 1 may be restricted from travelling to areas with predefined or measured cold temperatures,
- Vehicle Speed : Less than a set threshold, e.g., 10mph such as to avoid a risk of fire due to high speeds,
- Loading permitted : Downgraded, e.g., the vehicle 1 may be limited to only travel when loaded by less than a threshold.

### Regarding the control layer 32

If a sensing component of the control layer 32 is in a faulted state and is no longer capable of providing reliable control layer input data, the vehicle 1 may switch to an alternative control algorithm to achieve the same functionality with reduced performance. For example, if accelerometer data is used to detect potential roll events for stability control would no longer be available, the vehicle 1 may enter a downgraded state, e.g., the first degradation state 10, in which the path planning sensors such as camera(s) and/or radar and algorithms of the vehicle 1 may be used to limit vehicle speed and/or steering wheel rate of change to achieve a roll-over protection feature similar to if acceleration data would be available.

### Regarding the actuation layer 33

For example, if a power steering capability is reduced or lost in a steering system of the vehicle 1 such as due to a particular fault, e.g., full autonomous steering means are not achievable, then the vehicle 1 may revert to a primary downgraded state in which the vehicle 1 limits operating speed and the vehicle's braking system distributes braking force such that a yaw moment is created in conjunction with the remaining autonomous steering capability to navigate the vehicle to a safe location.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to handle an autonomous vehicle (1) configured in a first degradation state (10), wherein the first degradation state (10) controls a functionality limitation of the vehicle (1), the processing circuitry (602) being configured to:
- detect a need for the vehicle (1) to transition from the first degradation state (10) to a second degradation state (11), the second degradation state (11) being indicative of an updated functionality limitation of the vehicle (1),
- based on a predefined model, determine whether the vehicle (1) can safely transition from the first degradation state (10) to the second degradation state (11), and
- upon determining that the vehicle (1) cannot safely transition from the first degradation state (10) to the second degradation state (11), trigger a safety action.

2. The computer system (600) of claim 1, wherein the processing circuitry (602) is configured to:
- obtain information of one or more faults or errors in the vehicle (1), and
- determine whether the vehicle (1) can safely transition from the first degradation state (10) to the second degradation state (11) based on the obtained information of the one or more faults or errors in the vehicle (1).

3. The computer system (600) of claim 1 or 2, wherein the processing circuitry (602) is configured to:
- obtain information of one or more faults or errors in the vehicle (1), and
- determine the safety action based on the obtained information of the one or more faults or errors in the vehicle (1).

4. The computer system (600) of claim 2 or 3, wherein the processing circuitry (602) is configured to obtain information of the one or more faults or errors in the vehicle (1) by obtaining information of one or more faults or errors from any one or more out of: a perception layer (31) of a control system (30) of the vehicle (1), a control layer (32) of the control system (30) of the vehicle (1), an actuation layer (33) of the control system (30) of the vehicle (1), or a combination thereof.

5. The computer system (600) of claim 4, wherein the perception layer (31) relates to a functionality of predicting or estimating environment and/or internal status of the vehicle (1), preferably relating to a towing status of towed vehicle units of the vehicle (1).

6. The computer system (600) of claim 4 or 5, wherein the control layer (32) relates to a functionality of controlling a vehicle motion of the vehicle (1).

7. The computer system (600) of claim 4 or 5 or 6, wherein the actuation layer (33) relates to a functionality of actuating actuators (21) of the vehicle (1).

8. The computer system (600) of any of claims 1-7, wherein the processing circuitry (602) is configured to determine the safety action based on predefined heuristics for the transition from the first degradation state (10) to the second degradation state (11).

9. The computer system (600) of any of claims 1-8, wherein the first degradation state (10) and/or the second degradation state (11) respectively is indicative of any of that an autonomous mode of the vehicle (1) is fully functional, or indicative of any one or more out of:
- an autonomous mode of the vehicle (1) is only allowed in certain road areas, e.g., highways or geofenced,
- an autonomous mode of the vehicle (1) is only allowed when travelling off-road,
- an autonomous mode of the vehicle (1) is only allowed for a set vehicle speed range,
- an autonomous mode of the vehicle (1) is only allowed when not attached to a trailer,
- the vehicle (1) is in need of stopping.

10. A vehicle (1) comprising and/or is controlled by the computer system (600) of any of claims 1-9.

11. A computer-implemented method for handling an autonomous vehicle (1) configured in a first degradation state (10), wherein the first degradation state (10) controls a functionality limitation of the vehicle (1), the method comprising:
- by processing circuitry (602) of a computer system (600), detecting (203, 501) a need for the vehicle (1) to transition from the first degradation state (10) to a second degradation state (11), the second degradation state (11) being indicative of an updated functionality limitation of the vehicle (1),
- by the processing circuitry (602), based on a predefined model, determining (204, 502) whether the vehicle (1) can safely transition from the first degradation state (10) to the second degradation state (11), and
- by the processing circuitry (602), upon determining that the vehicle (1) cannot safely transition from the first degradation state (10) to the second degradation state (11), triggering (206, 503) a safety action.

12. The method of claim 11, further comprising determining (205) the safety action based on predefined heuristics for the transition from the first degradation state (10) to the second degradation state (11).

13. The method of claim 11 or 12, further comprising:
- obtaining (202) information of one or more faults or errors in the vehicle (1), and one or both of :
∘ determining (204) whether the vehicle (1) can safely transition from the first degradation state (10) to the second degradation state (11) based on the obtained information of the one or more faults or errors in the vehicle (1), and
∘ determining (205) the safety action based on the obtained information of the one or more faults or errors in the vehicle (1).

14. A computer program product comprising program code for performing, when executed by the processing circuitry (602), the method of any of claims 11-13.

15. A non-transitory computer-readable storage medium comprising instructions, which when executed by the processing circuitry (602), cause the processing circuitry (602) to perform the method of any of claims 11-13.
